# EUROPÄISCHE PATENTSCHRIFT

(11) **EP 1 051 442 B1**
(45) Veröffentlichungstag und Bekanntmachung des Hinweises auf die Patenterteilung: **19.10.2005**
(21) Anmeldenummer: 99906199.7
(22) Anmeldetag: 26.01.1999
(51) Int. Cl.: C08K 5/00, C08J 3/22

(54) **FARBMITTELKONZENTRATE ZUM EINFÄRBEN VON POLYOXYMETHYLEN-FORMMASSEN**
COLORANT CONCENTRATES FOR DYEING POLYOXYMETHYLENE MOULDING MATERIALS
CONCENTRES DE COLORANTS PERMETTANT DE COLORER DES CORPS MOULABLES EN POLYOXYMETHYLENE

(30) Priorität: 27.01.1998 DE 19803227
(43) Veröffentlichungstag der Anmeldung: 15.11.2000
(73) Patentinhaber: Ticona GmbH, 65451 Kelsterbach (DE)
(72) Erfinder: DISCH, Stefan, D-60599 Frankfurt (DE); ECKARDT, Peter, D-65719 Hofheim (DE); HOFFMOCKEL, Michael, 65812 Bad Soden (DE); MÜCK, Karl-Friedrich, D-65207 Wiesbaden (DE); REUSCHEL, Gerhard, D-65835 Liederbach (DE)
(86) Internationale Anmeldenummer: PCT/EP1999/000451
(87) Internationale Veröffentlichungsnummer: WO 1999/037709

(56) Entgegenhaltungen:
- WO-A-97/09381
- DE-A- 1 595 644
- PATENT ABSTRACTS OF JAPAN vol. 096, no. 012, 26. Dezember 1996 & JP 08 208946 A (DAINICHISEIKA COLOR &CHEM MFG CO LTD), 13. August 1996 in der Anmeldung erwähnt
- "LIGHT STABILITY OF PIGMENTED POLYACETAL (POM)" RESEARCH DISCLOSURE, Nr. 364, 1. August 1994, Seite 445/446 XP000468974
- PATENT ABSTRACTS OF JAPAN vol. 017, no. 113 (C-1033), 9. März 1993 & JP 04 298572 A (DAINIPPON INK & CHEM INC), 22. Oktober 1992
- PATENT ABSTRACTS OF JAPAN vol. 096, no. 004, 30. April 1996 & JP 07 331028 A (MITSUBISHI GAS CHEM CO INC), 19. Dezember 1995

## Beschreibung

Die vorliegende Erfindung betrifft Farbmittelkonzentrate, die besonders zum Einfärben von Formmassen aus Polyoxymethylen (POM) und zur Herstellung von farbigen Spritzgußteilen oder farbigen Extrudaten aus POM geeignet sind. Die damit hergestellten Produkte sind besonders stabil bei der Verarbeitung und weisen sehr niedrige Formaldehydemissionen auf.

Die Erfindung betrifft auch die Verwendung erfindungsgemäßer Farbmittelkonzentrate zur Herstellung von eingefärbten POM-Granulaten, -Formmassen oder -Formteilen mit geringer Formaldehydemission und das damit verbundene Verfahren zur Herstellung emissionsarmer, eingefärbter POM-Materialien sowie emissionsarme POM-Formmassen, welche die Bestandteile der erfindungsgemäßen Farbmittelkonzentrate in entsprechenden Anteilen enthalten.

Seit ihrer Markteinführung vor etwa 30 Jahren haben sich Polyoxymethylene als äußerst nützliche technische Werkstoffe in vielen Anwendungen durchgesetzt. Besonders als Konstruktionswerkstoff im Automobilbau und in der Elektroindustrie findet POM breite Anwendung. Beispiele hierfür sind in den anwendungstechnischen Broschüren der POM-Hersteller zu finden.

Aufgrund ihrer vorteilhaften Eigenschaften besteht das Bedürfnis, Polyoxymethylene auch für Sichtteile einzusetzen und für das Material weitere Anwendungsfelder zu erschließen. Hierfür ist es aber oft erforderlich, das Material optisch, d.h. farblich anzupassen. Zu diesem Zweck werden den POM-Formmassen Farbmittel in Form von Pigmenten oder polymerlöslichen Farbstoffen beigemischt.

Pigmente und Farbstoffe sind in den meisten Fällen staubend und neigen zur Verklumpung und zur Agglomeratbildung und sind daher oft nicht rieselfähig. Aus diesem Grunde lassen sich reine Farbmittel nur mit sehr hohem Aufwand homogen in Kunststoffe einarbeiten. Zur Erzielung eines gleichmäßigen Farbeindrucks ist jedoch eine homogene Verteilung des Farbmittels im Kunststoff besonders wichtig. Dies kann erreicht werden, indem die Farbmittel zunächst in hoher Konzentration, meist unter Verwendung von zusätzlichen Dispergierhilfen, in polymere Trägermaterialien, auch Carrier genannt, eingemischt. Die so erhaltene Farbmittelzubereitung, auch Masterbatch oder Farbmittelkonzentrat genannt, wird dann dem einzufärbenden Kunststoff beigemischt, um schließlich den gewünschten Farbeindruck zu erzielen.

Es ist nun allgemein bekannt (Damm, W. und Herrmann, E., in Gächter, Müller; 3. Ausgabe 1989, S. 730), daß gerade POM besonders schwierig einzufärben ist. Die Empfindlichkeit dieses Materials gegen Fremdstoffe, besonders wenn diese säurehaltig sind oder saure Gruppen aufweisen, was bei Farbmitteln oft der Fall ist, führt dazu, daß bei der Verarbeitung Materialabbau mit nachfolgender Formaldehydfreisetzung auftreten kann, was die Einsetzbarkeit des Materials zur Herstellung von Formteilen stark beeinträchtigt. Aus den genannten Gründen kann bisher nur eine begrenzte Anzahl von Farbmitteln zur Einfärbung von POM verwendet werden, ohne daß eine Beeinträchtigung der Produkt- und Materialeigenschaften erfolgt. Um den Materialabbbau in POM-Formmassen zu unterdrücken, werden im allgemeinen Stabilisatoren zugesetzt. Besonders bei eingefärbten POM-Formmassen ist eine wirksame Stabilisierung wichtig.

Es wird seit langem versucht, diese Nachteile zu umgehen. In JP-07053770 ist beschrieben, wie Pigmente unter Verwendung von langkettigen primären Alkoholen in Polyolefin als Trägermaterial eingemischt werden, um ein Farbkonzentrat zur Einfärbung einer Vielzahl von kommerziellen Polymeren zu erhalten. In mehreren anderen Schriften (JP-02281046, US-4810733, US-4624983, JP-60086155) wird ebenfalls die Verwendung von Polyolefinen als Carrier für Pigmente beschrieben.

In JP 08208946 wird zu einer pigmentierten Polyacetal-Formmasse Dicyandiamid als Stabilisator zugegeben. Dadurch wird erreicht, daß der Formaldehyd-Geruch beim Spritzgießen ohne Verlust der physikalischen Eigenschaften verringert wird.

In JP-04077528 wird die Verwendung von POM als Trägermaterial für Pigmente beschrieben. Hier werden dem Gemisch zusätzlich noch Polyamid 6 und Borsäureester als Dispergiermittel beigemischt. In KR-9308188 ist der Einsatz von POM als Carrier für Leitfähigkeitsruß beschrieben.

Obwohl die Verwendung von POM als Trägermaterial für Pigmente wie oben angegeben bereits bekannt ist, wurde bislang dem bestehenden Mangel der chemischen Instabilität und nachfolgenden Formaldehydabspaltung bei der Verarbeitung und aus Formteilen nur unzureichend abgeholfen. Mit den bislang üblichen Farbmittelkonzentraten gelingt es nicht zuverlässig, emissionsarme Formteile herzustellen.

Es waren daher POM-Formmassen zu entwickeln, in denen einerseits die Farbmittel sehr gut dispergiert sind, andererseits aber die bislang hierbei beobachtete Formaldehydemission wesentlich vermindert ist.

Die Aufgabe wird durch Farbmittelkonzentrate gelöst, die POM als Trägermaterial und neben den erforderlichen Farbmitteln noch Stabilisatoren und gegebenenfalls Dispergierhilfen enthalten.

Die erfindungsgemäßen Farbmittelkonzentrate bestehen aus leichtfließendem POM-Copolymerisat als Carrier für 15-80 Gew.-%, bevorzugt 20-60 Gew.-%, besonders bevorzugt 20-45 Gew.-% Farbmittel, 2-15 Gew.-%, bevorzugt 2-10 Gew.-%, besonders bevorzugt 4-10 Gew.-% stickstoffhaltigem Stabilisator und 0-15 Gew.-%, bevorzugt 0-10 Gew.-%, besonders bevorzugt 3-5 Gew.-% Dispergierhilfen. Das POM kann dabei noch weitere übliche Zusatzstoffe, beispielsweise UV-Stabilisatoren etc., enthalten. Die Angaben in Gew.-% beziehen sich dabei auf 100 Gew.-% Farbmittelzubereitung.

Als leichtfließendes POM-Copolymerisat wird erfindungsgemäß ein Oxymethylen-Copolymer verwendet, das im allgemeinen 0,6-15 Mol-%, bevorzugt 0,8-12 Mol-% und besonders bevorzugt 1-10 Mol-% Oxyethylen-Einheiten als Cobausteine im POM-Copolymerisat enthält und einen MFI von 9-50 g/10 min, bevorzugt 13-35 g/10 min und besonders bevorzugt von 25-35 g/10 min aufweist. Das Zahlenmittel, Mn, des Molekulargewichts bestimmt durch GPC beträgt mindestens 5000 g/mol, im allgemeinen 30000-70000 g/mol und bevorzugt 45000-65000 g/mol. An Stelle eines einzelnen POM-Copolymerisats ist auch eine Mischung von verschiedenen, unterschiedlich zusammengesetzten Polyoxymethylen-Copolymeren verwendbar.

Als Farbmittel können beliebige anorganische Pigmente wie Titandioxid, Ultramarinblau, Kobaltblau und andere, organische Pigmente und Farben wie Phthalocyanine, Anthrachinone und andere, oder Ruß entweder einzeln oder als Gemisch oder zusammen mit polymerlöslichen Farbstoffen eingesetzt werden. Überraschend zeigt sich nämlich, daß durch die erfindungsgemäße Zusammensetzung der Farbmittelzubereitung, die Auswahl der Farbmittel nicht mehr auf herkömmliche besonders für POM geeignete Farbmittel beschränkt ist.

Als stickstoffhaltige Stabilisatoren sind vorteilhaft Triamino-1,3,5-Triazin und seine Derivate, aliphatische Diamine, von denen die sekundären Diamine bevorzugt sind, Piperidin-Derivate einschließlich polymerer Formen, bevorzugt 2,2,6,6-TetramethylPiperidin-Derivate, Melamin-Formaldehydkondensate, Polyamide, Dicyandiamid, Allantion und seine Derivate sowie Hydantoin und seine Derivate einzeln oder in Kombination verwendbar.

Als Dispergierhilfe können, einzeln oder in Kombination, Polyalkylenoxide, beispielsweise Polyethylenglykol (PEG), Alkali- oder Erdalkalisalze oder Salze anderer zweiwertiger Metallionen, z.B. Zn²⁺, von langkettigen Fettsäuren, beispielsweise Stearate, Laurate, Oleate, Behenate, Montanate und Palmitate, sowie Amidwachse, Montanwachse oder Olefinwachse verwendet werden. Bevorzugte Dispergierhilfen sind dabei Polyalkylenoxide hoher Molmasse, insbesondere Polyethylenglykol mit einer Molmasse über 25000, Amid-, Montan-oder Olefinwachse sowie Magnesium- und Calciumstearate oder -hydroxystearate.

Die erfindungsgemäßen Farbmittelkonzentrate können durch einfaches Vermischen der Komponenten hergestellt werden. Mit allgemein üblichen und bekannten Verfahren wie Granulierung, Extrusion, Kneten etc. können die Farbmittelkonzentrate dann in POM-Formmassen eingearbeitet werden. Der Anteil des Farbmittelkonzentrats im eingefärbten POM-Formteil hängt dabei von der Farbintensität der gewählten Farbmittel und dem gewünschten Farbeindruck ab. Prinzipiell sind alle Mischungsverhältnisse denkbar.

Es ist auch möglich, die Bestandteile der erfindungsgemäßen Farbmittelkonzentrate, d.h. die Farbmittel, den Stabilisator und gegebenenfalls die Dispergierhilfe, in entsprechenden Anteilen direkt in POM-Formmassen einzuarbeiten. Derart hergestellte eingefärbte Formmassen weisen gegenüber bekannten POM-Formmassen bereits eine bessere Stabilität und eine deutlich geringere Formaldehydemission auf.

Die Erfindung betrifft deshalb auch Polyoxymethylenformmassen, die 0,2-1,5 Gew.-% Farbmittel, 0,02-0,3 Gew.-% stickstoffhaltigen Stabilisator und 0,05-0,75 Gew.-% Dispergierhilfe enthalten.

Besonders vorteilhaft ist jedoch die Verwendung der erfindungsgemäßen Farbmittelkonzentrate als Masterbatch zur Einfärbung von Granulaten oder Formmassen aus POM. Daraus hergestellte Formteile weisen im Vergleich zu den derzeit handelsüblichen Produkten die niedrigste Formaldehydemission auf. Besonders überraschend ist dabei, daß unter Verwendung der erfindungsgemäßen Farbmittelkonzentrate die Formaldehydemission aus eingefärbten POM-Formteilen noch erheblich geringer ist als die Formaldehydemission aus POM-Formteilen, in die vergleichbare Anteile an Farbmittel, Stabilisator und Dispergierhilfe direkt eingearbeitet wurden.

### Beispiele

In den Beispielen wurden folgende Pigmentmischungen verwendet:
Pigmentmischung (1): bestehend aus 53 Gew.-% Titandioxid, 39 Gew.-% Renolschwarz, 6,3 Gew.-% Titanorange und 1,7 Gew.-% Ekea Rot.
Pigmentmischung (2): bestehend aus: 69,4 Gew.-% Titandioxid, 14,8 Gew.-% Renolschwarz, 14,2 Gew.-% Titanorange und 1,6 Gew.-% Renolbraun.
Als handelsübliches POM-Copolymer wurde ®Hostaform der Ticona GmbH, Frankfurt, verwendet.

### Beispiel 1

Handelsübliches UV-stabilisiertes POM-Copolymer wurde mit einem erfindungsgemäßen Farbmasterbatch im Gewichtsverhältnis 24:1 gemischt. Aus dieser Mischung wurden im Spritzguß Platten der Wandstärke 1 mm gefertigt. Die Formaldehydemission aus diesen Platten wurde nach einer Lagerdauer von 24h entsprechend der Prüfvorschrift VDA 275 bestimmt. Das Masterbatch hatte die folgende Zusammensetzung:
25 Gew.-% Pigmentmischung (1)
5 Gew.-% Melamin
5 Gew.-% Polyethylenglykol der Molmasse 35000.
65 Gew.-% POM-Copolymer mit einem MFI von 28 g/10 min

Der Emissionswert der Spritzplatten betrug 9,7 mg/kg

### Vergleichsbeispiel 1

Handelsübliches UV-stabilisiertes POM-Copolymer wurde mit einem derzeit üblichen Farbmasterbatch im Gewichtsverhältnis 24:1 gemischt. Wie in Beispiel 1 wurden aus dieser Mischung Platten der Wandstärke 1 mm gefertigt und nach 24h Lagerdauer deren Formaldehydemission bestimmt. Das Masterbatch hatte die folgende Zusammensetzung:
25 Gew.-% Pigmentmischung (1)
0,5 Gew.-% sterisch gehindertes Phenol
0,5 Gew.-% Calciumcitrat
74 Gew.-% POM-Copolymer mit einem MFI von 28 g/10 min

Der Emissionswert der Spritzplatten betrug 300 mg/kg.

### Beispiel 2

Handelsübliches UV-stabilisiertes POM-Copolymer wurde mit einem erfindungsgemäßen Farbmasterbatch im Gewichtsverhältnis 29:1 gemischt. Wie in Beispiel 1 wurden aus dieser Mischung Platten der Wandstärke 1 mm gefertigt und nach 24h Lagerdauer deren Formaldehydemission bestimmt. Das Masterbatch hatte die folgende Zusammensetzung:
30 Gew.-% Pigmentmischung (2)
8 Gew.-% Polyethylenglykol der Molmasse 35000
2 Gew.-% Magnesiumstearat
5 Gew.-% Allantoin
55 Gew.-% POM-Copolymer mit einem MFI von 27 g/10 min.

Der Emissionswert der Spritzplatten betrug 3,0 mg/kg.

### Vergleichsbeispiel 2a

In handelsübliches, UV-stabilisiertes POM-Copolymer wurden 0,94 Gew.-% der Pigmentmischung (2) durch Granulierung eingearbeitet: Wie in Beispiel 1 wurden aus dem so erhaltenen Granulat Platten der Wandstärke 1 mm gefertigt und nach 24h Lagerdauer deren Formaldehydemission bestimmt. Der Emissionswert der Spritzplatten betrug 202 mg/kg.

### Vergleichsbeispiel 2b

In handelsübliches, UV-stabilisiertes POM-Copolymer wurden folgende Zusätze durch Granulierung eingearbeitet:
0,94 Gew.-% Pigmentmischung (2)
0,27 Gew.-% Polyethylenglykol der Molmasse 35000
0,07 Gew.-% Magnesiumstearat
0,17 Gew.-% Allantoin

Wie in Beispiel 1 wurden aus dem so erhaltenen Granulat Platten der Wandstärke 1 mm gefertigt und nach 24h Lagerdauer deren Formaldehydemission bestimmt. Der Emissionswert der Spritzplatten betrug 25 mg/kg.

### Beispiel 3

Handelsübliches UV-stabilisiertes POM-Copolymer wurde mit einem erfindungsgemäßen Farbmasterbatch im Verhältnis 29:1 gemischt. Wie in Beispiel 1 wurden aus dieser Mischung Platten der Wandstärke 1 mm gefertigt und nach 24h Lagerdauer deren Formaldehydemission bestimmt. Das Masterbatch hatte die folgende Zusammensetzung:
60 Gew.-% Pigmentmischung (2)
10 Gew.-% Polyethylenglykol der Molmasse 35000
4 Gew.-% Allantoin
26 Gew.-% POM-Copolymer mit einem MFI von 30 g/10 min

Der Emissionswert der Spritzplatten betrug 8,4 mg/kg.

### Beispiel 4

Handelsübliches UV-stabilisiertes POM-Copolymer wurde mit einem erfindungsgemäßen Farbmasterbatch im Verhältnis 29:1 gemischt. Aus dieser Mischung wurden im Spritzguß Platten der Wandstärke 1 mm gefertigt. Wie in Beispiel 1 wurden aus dieser Mischung Platten der Wandstärke 1 mm gefertigt und nach 24h Lagerdauer deren Formaldehydemission bestimmt. Das Masterbatch hatte die folgende Zusammensetzung:
60 Gew.-% Pigmentmischung (2)
6 Gew.-% Magnesiumstearat
4 Gew.-% Allantoin
30 Gew.-% POM-Copolymer mit einem MFI von 27 g/10 min

Der Emissionswert der Spritzplatten betrug 6,2 mg/kg.

## Patentansprüche

1. Farbmittelkonzentrat zur Herstellung von Polyoxymethylenformmassen mit verringerter Formaldehydemission enthaltend 15-80 Gew.-% Farbmittel ausgewählt aus der Gruppe umfassend Ruß, anorganische Pigmente und organische Pigmente, 2-15 Gew.-% eines stickstoffhaltigen Stabilisators und additiv zu 100 Gew.-% Farbmittelzubereitung ein Polyoxymethylen-Copolymer, dass 0,6-15 Mol-% Oxyethylen-Einheiten als Cobausteine enthält und einen MFI von 9-50 g/10min aufweist.

2. Farbmittelkonzentrat nach Anspruch 1, **dadurch gekennzeichnet, dass** als stickstoffhaltiger Stabilisator jeweils einzeln oder in Kombination Triaminotriazin oder ein davon abgeleitetes Derivat, aliphatische Diamine, Piperidin-Derivate, einschließlich polymerer Formen, Dicyaandiamid, Allantoin, Hydantoin, Melamin-Formaldehydkondensat oder ein Polyamidverwendet wird.

3. Farbmittelkonzentrat nach einem der Ansprüche 1 oder 2, **dadurch gekennzeichnet, dass** das Farbmittelkonzentrat 3-15 Gew.-% einer Dispergierhilfe enthält.

4. Farbmittelkonzentrat nach einem der Ansprüche 1 bis 3, **dadurch gekennzeichnet, dass** jeweils einzeln oder in Kombination als Dispergierhilfe Polyoxyalkylen, Amidwachs, Olefinwachs, Montanwachs oder Zink-, Alkali-oder Erdalkali- -Stearate, -Laurate, -Oleate, -Behenate, -Montanate oder - Palmitate verwendet wird.

5. Farbmittelkonzentrat nach Anspruch 4, **dadurch gekennzeichnet, dass** jeweils einzeln oder im Gemisch als Dispergierhilfe Polyethylenglykol mit einer Molmasse von über 25000 g/mol, Magnesiumstearat, Magnesiumhydroxystearat, Calciumstearat oder Calciumhydroxystearat verwendet wird.

6. Farbmittelkonzentrat nach einem oder mehreren der Ansprüche 1 bis 5, **dadurch gekennzeichnet, dass** jeweils einzeln oder im Gemisch mit anderen Farbmitteln als Farbmittel Titandioxid, Ultramarinblau, Kobaltblau, Ekea-Rot, Rhenolschwarz, Rhenolblau, ein Phthalocyanin oder ein Anthrachinon verwendet wird.

7. Farbmittelkonzentrat nach einem der Ansprüche 1 bis 7, **dadurch gekennzeichnet, dass** das Farbmittelkonzentrat einen UV-Stabilisator enthält.

8. Verfahren zur Herstellung von eingefärbten Polyoxymethylenformteilen mit verringerten Formaldehydemission, **dadurch gekennzeichnet, dass** ein Farbmittelkonzentrat nach einem der Ansprüche 1 bis 7 in ein Granulat oder eine Formmasse aus Polyoxymethylen eingearbeitet und daraus ein Formteil hergestellt wird.

9. Verwendung eines Farbmittelkonzentrats nach einem oder mehreren der vorangegangenen Ansprüche zur Herstellung von eingefärbten Polyoxymethylengranulaten, -formmassen oder -formteilen.

## Claims

1. A colorant concentrate for preparing polyoxymethylene molding compositions with reduced formaldehyde emission, comprising 15-80% by weight of colorant selected from the group which comprises carbon black, inorganic pigments and organic pigments, 2-15% by weight of a nitrogen-containing stabilizer, and also, to make up 100% by weight of colorant preparation, a polyoxymethylene copolymer which has 0.6-15 mol% of oxyethylene units as comonomer units and has an MFR of 9-50 g/10 min.

2. A colorant concentrate as claimed in claim 1, wherein the nitrogen-containing stabilizer used comprises, individually or in combination, triaminotriazine or a derivative thereof, aliphatic diamines, piperidine derivatives, including polymeric forms, dicyan diamide, allantoin, hydantoin, melamine-formaldehyde condensate or a polyamide.

3. A colorant concentrate as claimed in claim 1 or 2, which comprises 3-15% by weight of a dispersion aid.

4. A colorant concentrate as claimed in any of claims 1 to 3, wherein the dispersion aid used comprises, individually or in combination, polyoxyalkylene, amide wax, olefin wax, montan wax or the stearates, laurates, oleates, behenates, montanates or palmitates of zinc, or of alkali metals, or of alkaline earth metals.

5. A colorant concentrate as claimed in claim 4, wherein the dispersion aid used comprises, individually or mixed, polyethylene glycol with a molar mass of more than 25 000 glmol, magnesium stearate, magnesium hydroxystearate, calcium stearate or calcium hydroxystearate.

6. A colorant concentrate as claimed in one or more of claims 1 to 5, wherein the colorant used comprises, individually or mixed with other colorants, titanium dioxide, ultramarine blue, cobalt blue, ekea red, Renol black, Renol blue, a phthalocyanine or an anthraquinone.

7. A colorant concentrate as claimed in any of claims 1 to 7, which comprises a UV stabilizer.

8. A process for producing colored polyoxymethylene moldings with reduced formaldehyde emission, which comprises incorporating a colorant concentrate as claimed in any of claims 1 to 7 into pellets or into a molding composition made from polyoxymethylene, and producing a molding therefrom.

9. The use of a colorant concentrate as claimed in one or more of the preceding claims for producing colored polyoxymethylene pellets, polyoxymethylene molding compositions or polyoxymethylene moldings.

## Revendications

1. Concentré de produit colorant pour la production de matières à mouler à base de polyoxyméthylène à émission réduite de formaldéhyde, contenant 15-80 % en poids de produit colorant choisi dans le groupe comprenant le noir de carbone, des pigments minéraux et des pigments organiques, 2-15 % en poids d'un stabilisant azoté et, en complément à 100 % en poids de préparation de produit colorant, un copolymère de polyoxyméthylène qui contient 0,6-15 % en moles de groupes oxyéthylène en tant que co-composants et présente un MFI (indice de fluidité à chaud) de 9-50 g/10 min.

2. Concentré de produit colorant selon la revendication 1, **caractérisé en ce qu'**on utilise en tant que stabilisant azoté, chacun individuellement ou en association, de la triaminotriazine ou un dérivé de celle-ci, des diamines aliphatiques, des dérivés de pipéridine, y compris des formes polymères, du dicyanodiamide, de l'allantoïne, de l'hydantoïne, un produit de condensation mélamine-formaldéhyde ou un polyamide.

3. Concentré de produit colorant selon la revendication 1 ou 2, **caractérisé en ce que** le concentré de produit colorant contient 3-15 % en poids d'un adjuvant de dispersion.

4. Concentré de produit colorant selon l'une quelconque des revendications 1 à 3, **caractérisé en ce qu'**on utilise en tant qu'adjuvant de dispersion, chacun individuellement ou en association, un polyoxyalkylène, une cire de type amide, une cire oléfinique, de la cire de lignite ou des stéarates, laurates, oléates, béhénates, montanates ou palmitates de zinc, métaux alcalins ou alcalino-terreux.

5. Concentré de produit colorant selon la revendication 4, **caractérisé en ce qu'**on utilise en tant qu'adjuvant de dispersion, chacun individuellement ou en mélange, un polyéthylèneglycol ayant une masse moléculaire de plus de 25 000 g/mole, du stéarate de magnésium, de l'hydroxystéarate de magnésium, du stéarate de calcium ou de l'hydroxystéarate de calcium.

6. Concentré de produit colorant selon une ou plusieurs des revendications 1 à 5, **caractérisé en ce qu'**on utilise en tant que produit colorant, chacun individuellement ou en mélange avec d'autres produits colorants, du dioxyde de titane, du bleu outremer, du bleu de cobalt, du rouge Ekea, du noir Rhenol, du bleu Rhenol, une phtalocyanine ou une anthraquinone.

7. Concentré de produit colorant selon l'une quelconque des revendications 1 à 7, **caractérisé en ce que** le concentré de produit colorant contient un stabilisant UV.

8. Procédé pour la production de pièces moulées en polyoxyméthylène colorées, à émission réduite de formaldéhyde, **caractérisé en ce qu'**on incorpore un concentré de produit colorant selon l'une quelconque des revendications 1 à 7 dans un produit granulé ou une matière à mouler à base de polyoxyméthylène et on produit une pièce moulée à partir de celui-ci ou de celle-ci.

9. Utilisation d'un concentré de produit colorant selon une ou plusieurs des revendications précédentes, pour la production de produits granulés, matières à mouler ou pièces moulées à base de polyoxyméthylène, colorés.
